# EUROPÄISCHE PATENTANMELDUNG

(11) **EP 3 312 739 A1**
(43) Veröffentlichungstag der Anmeldung: **25.04.2018**
(21) Anmeldenummer: 17001722.2
(22) Anmeldetag: 19.10.2017
(51) Int. Cl.: G06F 17/30

(54) **VORRICHTUNG ZUM SPEICHERN, VERWALTEN UND ZUGRIFF AUF DIGITALE FOTOGRAPHIE, VERWENDUNG EINER VORRICHTUNG UND VERFAHREN**

(30) Priorität: 19.10.2016 DE 102016012497
(71) Anmelder: PP Picturepartners GmbH, 60325 Frankfurt am Main (DE)
(72) Erfinder: DEBALD, Otmar, 60325 Frankfurt Am Main (DE)
(74) Vertreter: Nitz, Astrid

(57) **Zusammenfassung**

Vorrichtung zum Speichern, Verwalten und Zugriff auf digitale Fotografien, umfassend ein Mittel zum Aufnehmen und/oder Übertragen digitaler Fotografien, insbesondere Digitalkamera, ein Mittel zum Erzeugen einer Sitzungsinformation für eine zeitlich begrenzte Phase betreffend die Aufnahme digitaler Fotografien, ein Mittel zum Speichern und/oder Verwalten der digitalen Fotografien, ein Mittel zum Erzeugen und/oder Aufnehmen zumindest eines Kennzeichnungscodes, der einem darzustellenden Objekt zugeordnet ist, insbesondere einer Person und/oder einem Produkt, wobei der Kennzeichnungscode insbesondere durch einen Scanner und/oder NFC-Lesegerät vom Objekt einzulesen ist, wobei einer oder mehrerer Fotografien, die durch Mittel zum Aufnehmen und/oder Übertragen digitaler Fotografien, insbesondere einer Digitalkamera, aufzuzeichnen sind und durch ein Mittel zum Speichern und/oder Verwalten der digitalen Fotografien zu speichern und/oder verwalten sind, ein Kennzeichnungscode und eine Sitzungsinformation zuzuordnen ist, insbesondere durch das Mittel zum Speichern und/oder Verwalten.

## Beschreibung

Die Erfindung betrifft eine Vorrichtung zum Speichern, Verwalten und Zugriff auf digitale Fotografien, nach dem Oberbegriff von Anspruch 1, Verfahren zur Verwendung einer Vorrichtung nach dem Oberbegriff von Anspruch 8, Verwendung einer Vorrichtung für Produktabbildungen nach dem Oberbegriff von Anspruch 9, eine Verwendung einer Vorrichtung für Personenabbildungen nach dem Oberbegriff von Anspruch 10.

Bekannt sind Digitalkameras oder Fotosoftware, die aufgenommene Fotografien der Reihe nach in einfachen Dateien ablegen. Der Nutzer muss anschließend selbst Sortierung nach Inhalten vornehmen oder eine Abbildung verschieben. Das in langwierig und fehleranfällig.

Aufgabe der vorliegenden Erfindung ist es, eine einfache, sichere und schnelle Vorrichtung zum Speichern, Verwalten und Zugriff auf digitale Fotografien bereitzustellen, die die Nachteile des Stands der Technik vermeidet.

Die Aufgabe wird gelöst durch eine Vorrichtung zum Speichern, Verwalten und Zugriff auf digitale Fotografien, umfassend ein Mittel zum Aufnehmen und/oder Übertragen digitaler Fotografien, insbesondere eine Digitalkamera und/oder einen Anschluss für eine Digitalkamera, ein Mittel zum Erzeugen einer Sitzungsinformation für eine zeitlich begrenzte Phase betreffend die Aufnahme digitaler Fotografien, ein Mittel zum Speichern und/oder Verwalten der digitalen Fotografien, ein Mittel zum Erzeugen und/oder Aufnehmen zumindest eines Kennzeichnungscodes, der einem darzustellenden Objekt zugeordnet ist, insbesondere einer Person und/oder einem Produkt, wobei der Kennzeichnungscode insbesondere durch einen Scanner und/oder NFC-Lesegerät vom Objekt einzulesen ist, wobei einer oder mehrerer Fotografien, die durch Mittel zum Aufnehmen und/oder Übertragen digitaler Fotografien, insbesondere einer Digitalkamera und/oder einen Anschluss für eine Digitalkamera, zu aufzuzeichnen und/oder übertragen sind und durch ein Mittel zum Speichern und/oder Verwalten der digitalen Fotografien zu speichern und/oder verwalten sind, ein Kennzeichnungscode und eine Sitzungsinformation zuzuordnen ist, insbesondere durch das Mittel zum Speichern und/oder Verwalten.

Die Erfindung ermöglicht es vorteilhaft, dass aufgenommene oder eingelesene digitale Fotografien sowie auf diesen Fotografien abgebildete Inhalte mit Hilfe einer einfachen und kompakten Vorrichtung, insbesondere weiterhin einer integrierten Plattform auf eine sehr schnelle Weise noch während einer Sitzung beispielsweise identifizierbar gemacht werden, kennzeichnen und hochladen, insbesondere interessant während Veranstaltungen oder bei Qualitätskontrollen Dazu können die Fotografien sofort von einer Kamera in die Vorrichtung heruntergeladen werden, das Aufnehmen eines Kennzeichens, das sofort in eine Datei zusammen mit der Fotografieinformation geschrieben werden, wobei insbesondere ein Entnehmen einer Fotografie aus einer Warteschlange und das Entsenden einer Fotografie an eine von der Vorrichtung generierte Internetadresse vorgenommen werden kann.

Diese Vorrichtung kann vorteilhaft an Digitalkameras angeschlossen werden oder diese umfassen oder in diese integriert sein. Es liest die digitalen Fotodateien aus der Digitalkamera aus, kann digitale Kennzeichnungscodes, insbesondere NFC und/oder RFID und/oder EAN-Strichcode oder insbesondere jegliches andere Kennzeichen, das durch ein Datenlesegerät eingefügt werden kann, insbesondere Archivierungscodes von externen Geräten, beispielsweise Scannern, auslesen, die beispielsweise Personen oder Produkten auf der digitalen Fotografie zugeordnet sind, stellt eine Verknüpfung von Kennzeichnungscode und der Fotografie her, schreibt die Kennzeichnungscodes in eine erweiterte Datei und transportiert die erweiterte Datei in eine nachgelagerte Datenbank, insbesondere Verwaltungssystem. Das nachgelagerte Verwaltungssystem erlaubt dem Nutzer die eindeutige Zuordnung eines Kennzeichnungscodes und der Fotografie zu der physischen Darstellung auf der Fotografie, insbesondere Produkt bzw. der Person.

Insbesondere einem Mittel zum Speichern und/oder Verwalten werden die eingescannten Kennzeichnungscodes mit den Fotografien verknüpft. Für die Abarbeitung können persistente Warteschlangen verwendet werden, die Fotografien und die erfassten Kennzeichnungscodes verarbeiten und beispielsweise an eine Schnittstelle (API) eines Mittels zum Speichern und/oder Verwalten weitergeben. Bevor die Fotografien versendet werden, können die Fotografien optional, beispielsweise entsprechend den Projekteinstellungen, verkleinert werden.

Zur Dokumentation von technischen Abläufen beispielsweise in einem Produktionsprozess oder in der Logistik kann mit den aufgenommenen und verarbeiteten Fotografien eine eindeutig zugeordnete Dokumentation erfolgen. Fotos können einer Artikelnummer, beispielsweise EANCode oder GTIN oder einer Vorgangsnummer, zugeordnet werden.

### Beispielhaft kann dies geschehen zur

- Dokumentation von Transport- oder Unfallschäden. Vom beschädigten Objekt und/oder dem Unfallort werden Fotografien erstellt, die mit einem Kennzeichnungscode versehen archiviert und zur Weiterverarbeitung des Schadensfalls genutzt werden.
- Dokumentation von beschädigten Produkten, Garantiefällen etc. in der Rückhol-Logistik. Vom zurück gegebenen Produkt wird ein Foto erstellt und mit einem Kennzeichnungscode in Form einer Vorgangsnummer versehen bzw. verknüpft. Dadurch erfolgt automatische Zuordnung des Fotos zum Vorgang.
- Dokumentation verschiedener Stufen eines Reparaturvorgangs, beispielsweise Karosseriereparaturen oder Aufbau eines Fahrzeugs oder einer Maschine. Das Foto wird mit einem Kennzeichnungscode in Form eines Vorgangscodes, der Artikelnummer oder einer anderen Identifikationsnummer versehen und kann gemeinsam mit der technischen Dokumentation archiviert werden.

Die Kommunikation mit einem externen Bluetooth Barcode-Scanner wird von der Vorrichtung über den zusätzlichen Bluetooth-Adapter gesteuert.

Vorteilhaft ist es, wenn durch ein Mittel zum Heraussenden eine Ziel-URL erzeugbar ist, an die die digitalen Fotografien mit Sitzungsinformation und Kennzeichnungscode zu übermitteln sind, wobei durch das Mittel zum Heraussenden die digitalen Fotografien mit Sitzungsinformationen und Kennzeichnungscodes insbesondere auf einer Website ablegbar sind, insbesondere sortiert nach thematischen Gruppen, insbesondere Sitzungsinformationen.

Vorteilhaft ist es, wenn durch das Mittel zum Speichern und/oder Verwalten digitale Fotografien und/oder Kennzeichnungscodes und/oder Sitzungsinformationen aus einer Signalwarteschlange zu übernehmen sind.

Vorteilhaft ist es, wenn die digitalen Fotografien vor dem Speichern hinsichtlich ihrer Datenmenge zu verkleinern sind, insbesondere bei einer Zustimmung zu einer Abfrage zur Verkleinerung, insbesondere durch das Mittel zum Speichern und/oder Verwalten der digitalen Fotografien.

Vorteilhaft ist es, wenn das Mittel zum Speichern und/oder Verwalten über ein Mittel zum Übertragen von Signalen in Form einer Funkverbindung, insbesondere einer WLAN-Verbindung, anzusteuern ist, wobei insbesondere mehrere Mittel zum Speichern und/oder Verwalten und/oder mehrere Mittel zum Übertragen von Signalen ansteuerbar sind.

Vorteilhaft ist es, wenn ein Mittel zum Übertragen der digitalen Fotografien vorgesehen ist, wobei das Mittel zum Übertragen der digitalen Fotografien und/oder das Mittel zum Speichern und/oder Verwalten der digitalen Fotografien in einer Transportvorrichtung untergebracht sind, mit Mitteln zum Übertragen von Signalen, insbesondere mittels elektrischer Leitungen und/oder einer Funkverbindung, insbesondere über WLAN, zum Mittel zum Aufnehmen digitaler Fotografien und/oder zum Mittel zum Erzeugen und/oder Aufnehmen eines Kennzeichnungscodes und/oder einer Sitzungsinformation für eine digitale Fotografie, wobei insbesondere durch das Mittel zum Übertragen bei Erkennen eines angeschlossenen Mittels zum Aufnehmen eine dauerhafte Verbindung herzustellen ist.

Vorteilhaft ist es, wenn durch ein Mittel zum Erzeugen von Zufallscodes ein Fotoidentifikationscode für im Wesentlichen jede Fotographie erzeugbar ist, die zusammen mit der Sitzungsinformation und den Kennzeichnungscodes in dem Mittel zum Speichern und/oder Verwalten der digitalen Fotografien ablegbar ist.

Die Aufgabe wird ebenfalls gelöst durch ein Verfahren zur Verwendung einer Vorrichtung zum Speichern, Verwalten und Zugriff auf digitale Fotografien nach einem der Ansprüche 1 bis 7, dadurch gekennzeichnet, dass durch ein Mittel zum Aufnehmen und/oder Übertragen digitaler Fotografien, insbesondere Digitalkamera, digitaler Fotografien aufgenommen werden, durch ein Mittel zum Erzeugen einer Sitzungsinformation für eine zeitlich begrenzte Phase betreffend die Aufnahme digitaler Fotografien eine Sitzungsinformation erzeugt wird, durch ein Mittel zum Speichern und/oder Verwalten der digitalen Fotografien, durch ein Mittel zum Erzeugen und/oder Aufnehmen zumindest eines Kennzeichnungscodes, der einem darzustellenden Objekt zugeordnet wird, insbesondere einer Person und/oder einem Produkt, wobei der Kennzeichnungscode insbesondere durch einen Scanner vom Objekt eingelesen wird, wobei einer oder mehrerer Fotografien, die durch Mittel zum Aufnehmen und/oder Übertragen digitaler Fotografien, insbesondere einer Digitalkamera, aufgezeichnet werden und durch ein Mittel zum Speichern und/oder Verwalten der digitalen Fotografien gespeichert und/oder verwaltet werden, ein Kennzeichnungscode und eine Sitzungsinformation zugeordnet werden, insbesondere durch das Mittel zum Speichern und/oder Verwalten.

Die Aufgabe wird ebenfalls gelöst durch eine Verwendung einer Vorrichtung nach einem der Ansprüche 1 bis 7, für Produktabbildungen, insbesondere zur Qualitätskontrolle, wobei insbesondere die Produkte mit einem Kennzeichnungscode versehen sind.

Die Aufgabe wird ebenfalls gelöst durch eine Verwendung einer Vorrichtung nach einem der Ansprüche 1 bis 7, für Personenabbildungen, insbesondere Veranstaltungsfotografie, insbesondere Hochzeiten, wobei abgebildeten Personen Kennzeichnungscodes zugeordnet sind, die insbesondere mittels eines Mittel zum Aufnehmen zumindest eines Kennzeichnungscodes aufzunehmen sind.

Personen, die bei Veranstaltungen fotografiert werden, können mit Hilfe eines Kennzeichnungscodes, insbesondere Barcodes, eines QR-Codes oder eines RFID/NFC Signals identifiziert werden. Die Person, die fotografiert wird kann dann mit Hilfe des Kennzeichnungscodes auch Zugang zu den Fotografien erhalten, auf denen sie abgebildet ist, so dass zeitaufwändiges und lästiges Suchen entfällt. Die Anzahl von Personen auf einer Fotografie ist dabei nicht begrenzt.

Für eine Registrierung von Personen beispielsweise bei einer Zugangskontrolle können Personen mit Hilfe von Fotografien registriert werden, beispielsweise im Sicherheitsbereich eines Gebäudes. Ein Sicherheitsausweis mit Foto und persönlichem Zugangscode wird durch das System erstellt. Die Fotografien mit persönlichem Zugangscode können dann auch an ein Personenerkennungssystem weitergeleitet werden. Der Zugang von Personen in gesicherten Bereichen kann dann eindeutig anhand einer Fotografie dokumentiert und nachgewiesen werden.

Die Aufgabe wird ebenfalls gelöst durch ein Verfahren zur Verwendung einer Vorrichtung zum Aufnehmen, Speichern, Verwalten und Zugriff auf digitale Fotografien nach einem der Ansprüche 1 bis 7, dadurch gekennzeichnet, dass durch ein Mittel zum Aufnehmen digitaler Fotografien, insbesondere Digitalkamera, digitaler Fotografien aufgenommen werden, durch ein Mittel zum Erzeugen einer Sitzungsinformation für eine zeitlich begrenzte Phase betreffend die Aufnahme digitaler Fotografien eine Sitzungsinformation erzeugt wird, durch ein Mittel zum Speichern und/oder Verwalten der digitalen Fotografien, durch ein Mittel zum Erzeugen und/oder Aufnehmen zumindest eines Kennzeichnungscodes, der einem darzustellenden Objekt zugeordnet wird, insbesondere einer Person und/oder einem Produkt, wobei der Kennzeichnungscode insbesondere durch einen Scanner vom Objekt eingelesen wird, wobei einer oder mehrerer Fotografien, die durch Mittel zum Aufnehmen digitaler Fotografien, insbesondere einer Digitalkamera, aufgezeichnet werden und durch ein Mittel zum Speichern und/oder Verwalten der digitalen Fotografien gespeichert und/oder verwaltet werden, ein Kennzeichnungscode und eine Sitzungsinformation zugeordnet werden, insbesondere durch das Mittel zum Speichern und/oder Verwalten.

Die Vorrichtung umfasst vorteilhaft einen Mikrocomputer, Leiterplatinen und kann mit einer digitalen Kamera beispielsweise über ein USB-OTG Kabel verbunden und an der Kamera für den mobilen Einsatz befestigt werden. Die Vorrichtung kann Schnittstellen zur Aufnahme von WiFi oder Bluetooth-Signalen aufweisen sowie ein Sendemodul, um über WiFi mit einem Server, insbesondere Internetserver, zu kommunizieren.

Mittels einer Software kann ein USB-Port der Vorrichtung, der die Bilder von der Kamera entgegennimmt und weitergibt, überwacht und beim Erkennen einer unterstützten Digitalkamera eine dauerhafte Verbindung hergestellt werden.

Weiterhin kann der Ladezustand einer in der Vorrichtung eingesetzten Batterie überprüft und ein geringer Batteriezustand signalisiert werden. so dass bei Unterschreiten eines Schwellenwerts die Vorrichtung kontrolliert heruntergefahren werden kann.

Weiterhin kann eine WLan-Verbindung der Vorrichtung überprüft werden und abgebrochene Verbindungen wieder hergestellt werden, sobald die Vorrichtung sich in Reichweite des WLAN-Netzes befindet.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

### Es zeigen:

- Fig. 1: einen schematischen Aufbau einer erfindungsgemäßen Vorrichtung als Flussdiagramm,
- Fig. 2: einen schematischen Ablauf einer erfindungsgemäßen Verwendung einer erfindungsgemäßen Vorrichtung.

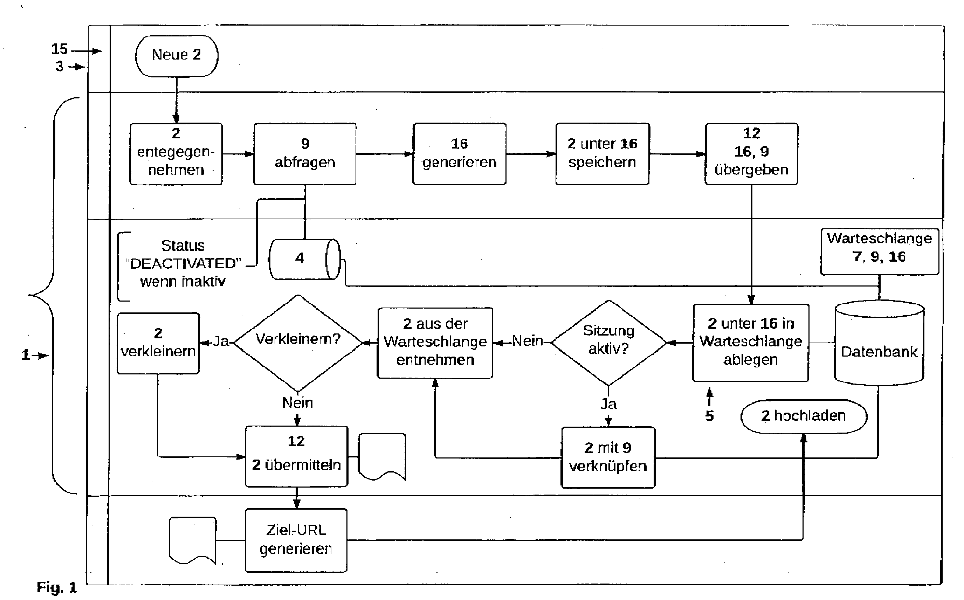

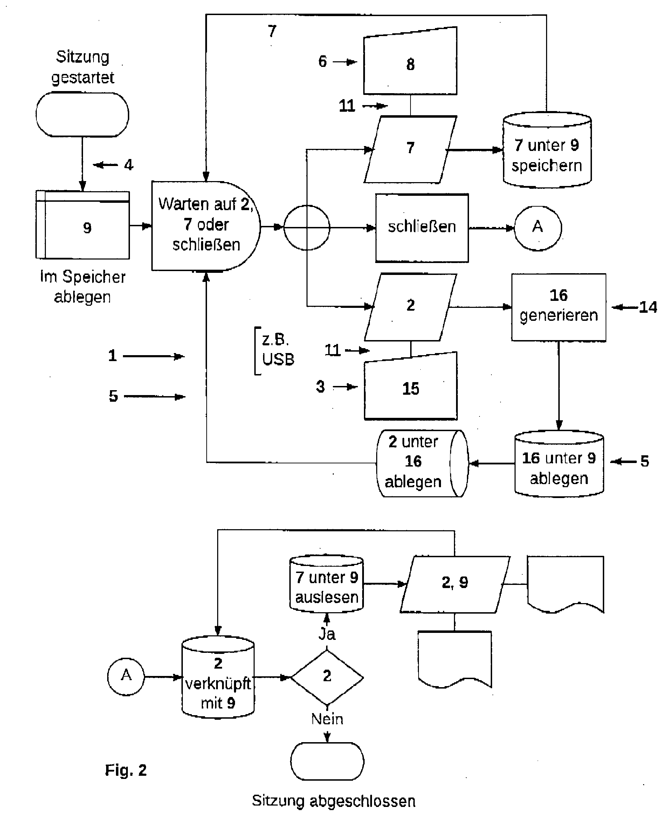

Fig. 1 zeigt einen schematischen Aufbau als Flussdiagramm einer erfindungsgemäßen Vorrichtung 1 zum Speichern, Verwalten und Zugriff auf digitale Fotografien 2, umfassend ein Mittel 3 zum Aufnehmen und/oder Übertragen digitaler Fotografien, insbesondere Digitalkamera 15, ein Mittel 4 zum Erzeugen einer Sitzungsinformation 9 für eine zeitlich begrenzte Phase betreffend die Aufnahme digitaler Fotografien, ein Mittel 5 zum Speichern und/oder Verwalten der digitalen Fotografien, ein Mittel zum Erzeugen und/oder Aufnehmen zumindest eines Kennzeichnungscodes 7, gezeigt beispielsweise in Fig. 2, der einem darzustellenden Objekt zugeordnet ist, insbesondere einer Person und/oder einem Produkt, wobei der Kennzeichnungscode 7 insbesondere durch einen Scanner 8 vom Objekt einzulesen ist, wobei einer oder mehrerer Fotografien, die durch Mittel 3 zum Aufnehmen und/oder Übertragen digitaler Fotografien, insbesondere einer Digitalkamera 15, aufzuzeichnen sind und durch ein Mittel 5 zum Speichern und/oder Verwalten der digitalen Fotografien zu speichern und/oder verwalten sind, ein Kennzeichnungscode 7 und eine Sitzungsinformation 9 zuzuordnen ist, insbesondere durch das Mittel 5 zum Speichern und/oder Verwalten.

Beispielsweise können die digitalen Fotografien vor dem Speichern hinsichtlich ihrer Datenmenge verkleinert werden, insbesondere bei einer Zustimmung zu einer Abfrage zur Verkleinerung, insbesondere durch das Mittel 5 zum Speichern und/oder Verwalten der digitalen Fotografien

Weiterhin kann eine Smartphone App an oder in Verbindung mit einem Mittel 5 zum Speichern und Verwalten eingesetzt werden, mit der die in Reichweite befindlichen Vorrichtungen verwaltet werden, wodurch bei erkannten Vorrichtungen eine dauerhafte Verbindung aufgebaut werden kann, so dass dann weitere Funktionen zur Verfügung stehen. Die Sitzung der Vorrichtung 1 kann aktiviert bzw. deaktiviert werden. Im aktivierten Zustand der Sitzung können unterstützte Kennzeichnungscodes 7 beispielsweise in Form von Barcodes, beispielsweise EAN13 oder QR-Code, über die Smartphonekamera eingelesen werden. Diese werden bei Abschluss einer Sitzung, dem Deaktivieren, dann übertragen.

Eine Schnittstelle für die Vorrichtung 1 im gleichen Netzwerk kann bereitgestellt werden und empfängt sämtliche Fotografien 2 und erfassten Kennzeichnungscodes 7. Optional können die Fotografien 2 vor dem Weiterversand verkleinert werden. Anschließend können die Fotografien 2 an die Schnittstelle eines Fotomanagers versendet werden.

Mit Hilfe einer Webserver-Software können die unterschiedlichen Funktionen erfüllt werden. Zum einen können damit die Vorrichtungsnutzer und deren Logins verwaltet, sowie die globalen Einstellungen bearbeitet werden. Über den Nutzerzugang können die Nutzer selbst ihre Projekte verwalten, sowie die empfangenen Fotografien 2 und rudimentäre Statistiken einsehen. Die Grundfunktionen des Fotomanagers sind beispielsweise: Projektverwaltung, Auftragsverwaltung, Bildverwaltung, Codeverwaltung, Seiten- und Templateverwaltung.

Fig. 2 zeigt einen schematischen Aufbau als Flussdiagramm einer erfindungsgemäßen Sitzung einer Vorrichtung 1 zum Speichern, Verwalten und Zugriff auf digitale Fotografien 2, umfassend ein Mittel 3 zum Aufnehmen und/oder Übertragen digitaler Fotografien, insbesondere Digitalkamera 15, ein Mittel 4 zum Erzeugen einer Sitzungsinformation 9 für eine zeitlich begrenzte Phase betreffend die Aufnahme digitaler Fotografien, ein Mittel 5 zum Speichern und/oder Verwalten der digitalen Fotografien, ein Mittel 6 zum Erzeugen und/oder Aufnehmen zumindest eines Kennzeichnungscodes 7, der einem darzustellenden Objekt zugeordnet ist, insbesondere einer Person und/oder einem Produkt, wobei der Kennzeichnungscode 7 insbesondere durch einen Scanner 8 vom Objekt einzulesen ist, wobei einer oder mehrerer Fotografien, die durch Mittel 3 zum Aufnehmen und/oder Übertragen digitaler Fotografien, insbesondere einer Digitalkamera 15, aufzuzeichnen sind und durch ein Mittel 5 zum Speichern und/oder Verwalten der digitalen Fotografien zu speichern und/oder verwalten sind, ein Kennzeichnungscode 7 und eine Sitzungsinformation 9 zuzuordnen ist, insbesondere durch das Mittel 5 zum Speichern und/oder Verwalten.

Durch ein Mittel 14 zum Erzeugen von Zufallscodes kann ein Fotoidentifikationscode 16 für im Wesentlichen jede Fotografie 2 erzeugbar ist, die zusammen mit der Sitzungsinformation 9 und den Kennzeichnungscodes 7 in dem Mittel 5 zum Speichern und/oder Verwalten der digitalen Fotografien ablegbar ist.

### BEZUGSZEICHENLISTE

- 1: Vorrichtung zum Speichern, Verwalten und Zugriff
- 2: Fotografie
- 3: Mittel zum Aufnehmen und/oder Übertragen
- 4: Mittel zum Erzeugen einer Sitzungsinformation
- 5: Mittel zum Speichern und/oder Verwalten
- 6: Mittel zum Erzeugen und/oder Aufnehmen
- 7: Kennzeichnungscode
- 8: Scanner
- 9: Sitzungsinformation
- 10: Mittel zum Heraussenden
- 11: Mittel zum Übertragen von Signalen
- 12: Mittel zum Übertragen der digitalen Fotografien
- 13: Transportvorrichtung
- 14: Mittel zum Erzeugen von Zufallscodes
- 15: Digitalkamera
- 16: Fotoidentifikationscode

## Patentansprüche

1. Vorrichtung (1) zum Speichern, Verwalten und Zugriff auf digitale Fotografien (2), umfassend
ein Mittel (3) zum Aufnehmen und/oder Übertragen digitaler Fotografien, insbesondere Digitalkamera (15),
ein Mittel (4) zum Erzeugen einer Sitzungsinformation (9) für eine zeitlich begrenzte Phase betreffend die Aufnahme digitaler Fotografien,
ein Mittel (5) zum Speichern und/oder Verwalten der digitalen Fotografien,
ein Mittel (6) zum Erzeugen und/oder Aufnehmen zumindest eines Kennzeichnungscodes (7), der einem darzustellenden Objekt zugeordnet ist, insbesondere einer Person und/oder einem Produkt, wobei der Kennzeichnungscode (7) insbesondere durch einen Scanner (8) und/oder NFC-Lesegerät vom Objekt einzulesen ist,
wobei einer oder mehrerer Fotografien, die durch Mittel (3) zum Aufnehmen und/oder Übertragen digitaler Fotografien, insbesondere einer Digitalkamera (15), aufzuzeichnen sind und durch ein Mittel (5) zum Speichern und/oder Verwalten der digitalen Fotografien zu speichern und/oder verwalten sind, ein Kennzeichnungscode (7) und eine Sitzungsinformation (9) zuzuordnen ist, insbesondere durch das Mittel (5) zum Speichern und/oder Verwalten.

2. Vorrichtung nach Anspruch 1, **dadurch gekennzeichnet, dass** durch ein Mittel (10) zum Heraussenden eine Ziel-URL erzeugbar ist, an die die digitalen Fotografien mit Sitzungsinformation (9) und Kennzeichnungscode (7) zu übermitteln sind, wobei durch das Mittel (10) zum Heraussenden die digitalen Fotografien mit Sitzungsinformationen (9) und Kennzeichnungscodes (7) insbesondere auf einer Website ablegbar sind, insbesondere sortiert nach thematischen Gruppen, insbesondere Sitzungsinformationen.

3. Vorrichtung nach einem der Ansprüche 1 bis 2, **dadurch gekennzeichnet, dass** durch das Mittel (5) zum Speichern und/oder Verwalten digitale Fotografien und/oder Kennzeichnungscodes (7) und/oder Sitzungsinformationen (9) aus einer Signalwarteschlange zu übernehmen sind.

4. Vorrichtung nach einem der Ansprüche 1 bis 3, **dadurch gekennzeichnet, dass** die digitalen Fotografien vor dem Speichern hinsichtlich ihrer Datenmenge zu verkleinern sind, insbesondere bei einer Zustimmung zu einer Abfrage zur Verkleinerung, insbesondere durch das Mittel (5) zum Speichern und/oder Verwalten der digitalen Fotografien.

5. Vorrichtung nach einem der Ansprüche 1 bis 4, **dadurch gekennzeichnet, dass** das Mittel (5) zum Speichern und/oder Verwalten über ein Mittel (11) zum Übertragen von Signalen in Form einer Funkverbindung, insbesondere einer WLAN-Verbindung, anzusteuern ist, wobei insbesondere mehrere Mittel (5) zum Speichern und/oder Verwalten und/oder mehrere Mittel (11) zum Übertragen von Signalen ansteuerbar sind.

6. Vorrichtung nach einem der Ansprüche 1 bis 5, **dadurch gekennzeichnet, dass** ein Mittel (12) zum Übertragen der digitalen Fotografien vorgesehen ist,
wobei das Mittel (12) zum Übertragen der digitalen Fotografien und/oder das Mittel (5) zum Speichern und/oder Verwalten der digitalen Fotografien in einer Transportvorrichtung (13) untergebracht sind, mit Mitteln (11) zum Übertragen von Signalen, insbesondere mittels elektrischer Leitungen und/oder einer Funkverbindung, insbesondere über WLAN,
zum Mittel (3) zum Aufnehmen digitaler Fotografien und/oder zum Mittel (6) zum Erzeugen und/oder Aufnehmen eines Kennzeichnungscodes (7) und/oder einer Sitzungsinformation (9) für eine digitale Fotografie, wobei insbesondere durch das Mittel (12) zum Übertragen bei Erkennen eines angeschlossenen Mittels (3) zum Aufnehmen eine dauerhafte Verbindung herzustellen ist.

7. Vorrichtung nach einem der Ansprüche 1 bis 6, **dadurch gekennzeichnet, dass** durch ein Mittel (14) zum Erzeugen von Zufallscodes ein Fotoidentifikationscode (16) für im Wesentlichen jede Fotografie (2) erzeugbar ist, die zusammen mit der Sitzungsinformation (9) und den Kennzeichnungscodes (7) in dem Mittel (5) zum Speichern und/oder Verwalten der digitalen Fotografien ablegbar ist.

8. Verfahren zur Verwendung einer Vorrichtung zum Aufnehmen, Speichern, Verwalten und Zugriff auf digitale Fotografien nach einem der Ansprüche 1 bis 7,
**dadurch gekennzeichnet, dass**
durch ein Mittel (3) zum Aufnehmen und/oder Übertragen digitaler Fotografien, insbesondere Digitalkamera, digitaler Fotografien aufgenommen werden,
durch ein Mittel (4) zum Erzeugen einer Sitzungsinformation (9) für eine zeitlich begrenzte Phase betreffend die Aufnahme digitaler Fotografien eine Sitzungsinformation erzeugt wird,
durch ein Mittel (5) zum Speichern und/oder Verwalten der digitalen Fotografien, durch ein Mittel (6) zum Erzeugen und/oder Aufnehmen zumindest eines Kennzeichnungscodes (7), der einem darzustellenden Objekt zugeordnet wird, insbesondere einer Person und/oder einem Produkt, wobei der Kennzeichnungscode (7) insbesondere durch einen Scanner (8) vom Objekt eingelesen wird,
wobei einer oder mehrerer Fotografien, die durch Mittel (3) zum Aufnehmen und/oder Übertragen digitaler Fotografien, insbesondere einer Digitalkamera, aufgezeichnet werden und durch ein Mittel (5) zum Speichern und/oder Verwalten der digitalen Fotografien gespeichert und/oder verwaltet werden, ein Kennzeichnungscode (7) und eine Sitzungsinformation (9) zugeordnet werden, insbesondere durch das Mittel (5) zum Speichern und/oder Verwalten.

9. Verwendung einer Vorrichtung nach einem der Ansprüche 1 bis 7, für Produktabbildungen, insbesondere zur Qualitätskontrolle, wobei insbesondere die Produkte mit einem Kennzeichnungscode (7) versehen sind.

10. Verwendung einer Vorrichtung nach einem der Ansprüche 1 bis 7, für Personenabbildungen, insbesondere Veranstaltungsfotografie, insbesondere Hochzeiten, wobei abgebildeten Personen Kennzeichnungscodes (7) zugeordnet sind, die insbesondere mittels eines Mittel (6) zum Aufnehmen zumindest eines Kennzeichnungscodes (7) aufzunehmen sind.
